Europäisches Patentamt

(19) European Patent Office

Office européen des brevets

(11) Publication number: **0 207 790 B1**

# EUROPEAN PATENT SPECIFICATION

(12)

(45) Date of publication of patent specification :
06.02.91 Bulletin 91/06

(21) Application number: 86305135.5

(22) Date of filing: 02.07.86

(51) Int. Cl.⁵: **G06F 15/72**

(54) Intersection computer and method therefor.

(30) Priority: 05.07.85 GB 8517045

(43) Date of publication of application :
07.01.87 Bulletin 87/02

(45) Publication of the grant of the patent :
06.02.91 Bulletin 91/06

(84) Designated Contracting States :
AT BE CH DE FR GB IT LI LU NL SE

(56) References cited :
US-A- 3 889 107
IBM TECHNICAL DISCLOSURE BULLETIN,
vol. 18, no. 11, April 1976, pages 3873-3876,
New York, US; A. APPEL: "Hidden line
eliminator for complex surfaces"

(73) Proprietor : **TECTOR LIMITED**
**Woodhill Road Collingham**
**Newark Nottinghamshire NG23 7NR (GB)**

(72) Inventor : **Nesbitt, Norman Robert Sidney**
**12 Glovers Lane Balderton**
**Newark Nottinghamshire (GB)**

(74) Representative : **Billington, Lawrence Emlyn et**
**al**
**HASELTINE LAKE & CO Hazlitt House 28**
**Southampton Buildings Chancery Lane**
**London WC2A 1AT (GB)**

EP 0 207 790 B1

## Description

The invention relates to a method and a circuit for determining a point of intersection of two linear functions dependent on the same independent variable and is of particular, but not exclusive, application to the generation of visual images by digital processing using the ray tracing technique.

There are two known basic methods for generating images from mathematical models defined as planar surface approximations of the physical object.

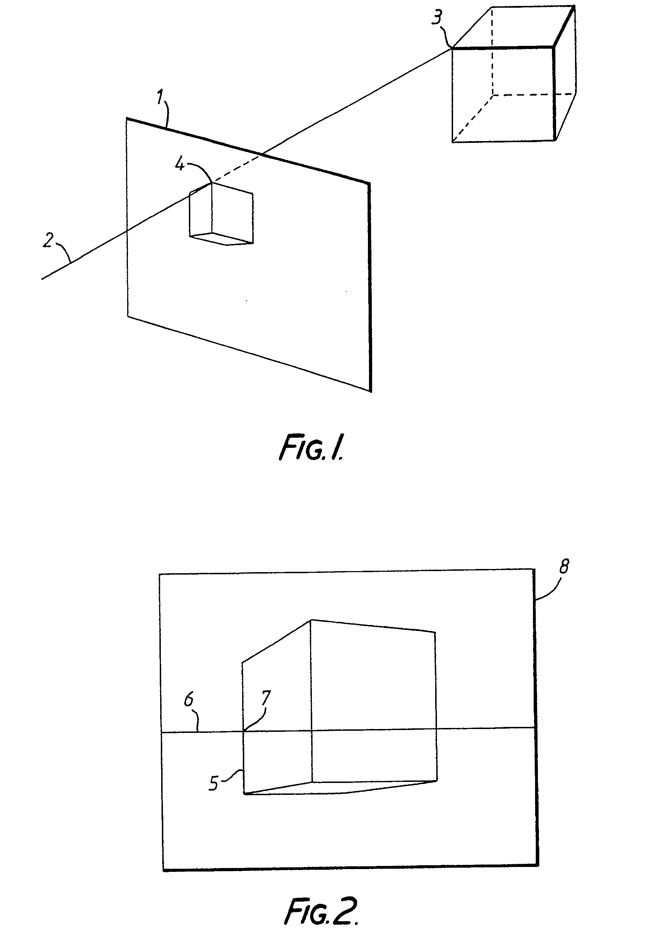

The first (projection method) relies on the surface being defined in terms of its vertices and edges. With reference to Figure 1, the vertices such as 3 are mathematically projected into the image plane 1 by determining the intersection point 4 of the ray joining the observer's eye point 2 to the vertex 3 with the image plane 1. Prior to projection, the vertices are rotated and displaced so that the model is oriented and positioned as desired relative to the observer. Surfaces facing towards the observer are determined. After projection, surfaces facing away from the observer are ignored.

With reference to Figure 2, the image plane 8 is imagined to have superimposed on it a set of lines such as 6 corresponding to the raster of a television display. The points such as 7 at which the projected edge 5 intersects 6 are determined, these points being referred to as edge crossings.

All edge crossings for a given raster line are ordered in the direction in which the line is drawn during display. Finally, measures of range are related to the edge crossings belonging to a surface and compared with the ranges of other surfaces at the same point to determine which surface is visible. When repeated for each raster line the result is the display of solid objects with appropriate occultation between objects.

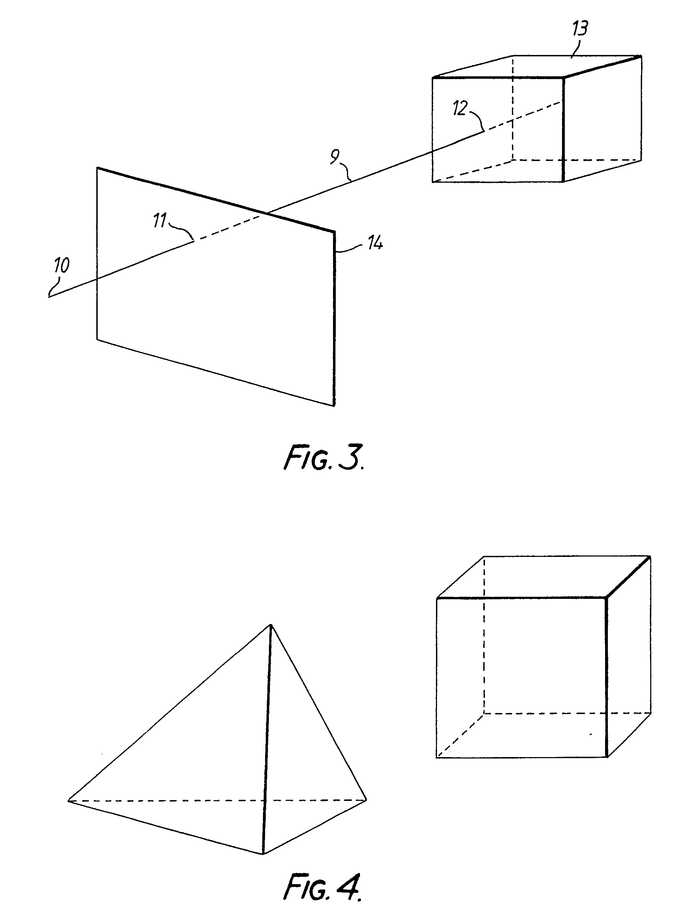

The second method, termed the ray tracing method, imagines, with reference to Figure 3, a ray 9 from the observer's eye point 10 passing through a chosen point 11 in the image plane 14 and intersecting all surfaces of the model 13 in points such as 12. A measure of the range to all these points is determined as described later and the ordering of these ranges allows the surface visible to the observer at the chosen point to be determined.

Comparing the two methods, the projection method confines processing to edges. This is possible because, in the simplest image generator, the colour of all points of a plane surface is the same, a property of the surface called coherency, and so computing may be confined to only those points where the colour changes namely at the intersection of surfaces. There are, however, several problems inherent with this method. Edges extending outside the area of the image plane corresponding to the display screen need to be truncated or clipped to the boundaries of the area, additional edges may need to be created for surfaces extending outside the area and there is no easy method for determining the surface seen by the observer since projection destroys range information.

The ray tracing method requires no edge clipping or additional edges to be created and range information is preserved. However no use is made of surface coherency so the basic method requires intensive processing.

The known basic method of ray tracing as applied to models comprising planar surfaces is now described.

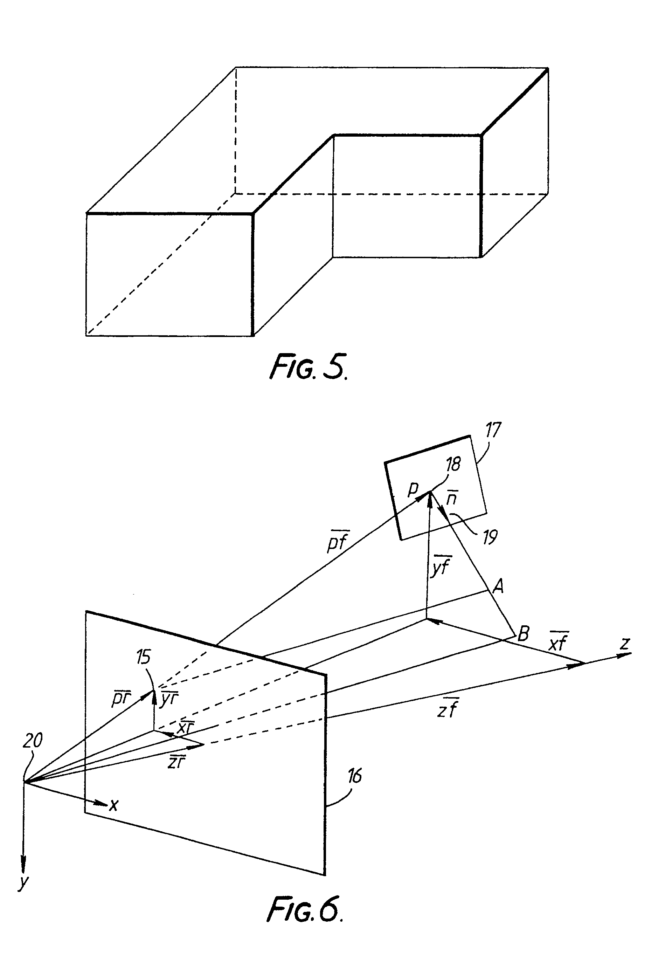

The model to be visualised is defined in terms of a number of convex shapes termed phrases, such as shown in Figure 4. The shapes may be separate or intersect as required to provide the overall appearance of the object. Shapes containing concavities such as shown in Figure 5, are divided into simpler convex shapes.

The ray tracing method is applied to each phrase in turn to determine, at each point in the image plane, the surfaces, if any, of those phrases closest to the observer. The ranges to the points of intersection between the phrase surfaces and the selected ray are then compared to determine the closest and therefore visible surface.

With reference to Figure 6, x, y and z define a set of axes whose origin is based on the observer's eye point 20. A ray from 20 passing through a selected point 15 in the image plane 16, intersects a surface of a phrase 17 at point 18. $\overline{pf}$, $\overline{pr}$ and pf, pr represent vectors and their corresponding magnitudes from 20 to 18 and 15 respectively ; xf, yf, zf, xr, yr, zr xf, yf, zf and xr, yr, zr represent the corresponding vector components and component magnitudes respectively.

According to the well known theory of similar triangles :

pr/pf = zr/zf equation 1

The projections of the vectors $\overline{pr}$ and $\overline{pf}$ onto the surface normal 19 represented by the unit vector $\overline{n}$ are respectively $\overline{pr}.\overline{n}$ and $\overline{pf}.\overline{n}$, where "." indicates a scalar product of vectors, and are shown as lines AB and PB in Figure 6. It is observed that the magnitude of $\overline{pf}.\overline{n}$ is the perpendicular distance from the observer's eye point to the plane containing the surface, a quantity which is readily computed. In addition the polarity of this scalar product is negative for a normal having a component pointing towards the observer and positive

2

otherwise. Using the convention that the normal points in a direction away from a convex phrase, the polarity of the scalar product can be used to determine if the surface faces towards or away from the observer. Such faces are termed forward and reversed respectively.

According to the theory of similar triangles :

$AB/PB = pr/pf$ equation 2

Comparison of equation 1 and 2 gives :

$AB/PB = \overline{(pr.n)}/\overline{pf.n)} = zr/zf$ equation 3

Expressing the normal 19 in terms of its components l, m, and n, expanding the scalar product $\overline{pr.n}$ and equating $\overline{pf.n}$ to a constant d allows equation 3 to be expressed as :

$zr/zf = (lxr + myr + nzr)/d$

or

$1/zf = (lxr)/(dzr) + (myr)/(dzr) + n/d$ equation 4

$1/zf$, hereinafter termed the surface depth, is the reciprocal of the z component of the ray from the eye point to the surface and is therefore a measure of the range to the surface for this ray.

$zr$ is the perpendicular distance from the eye point to the image plane and is also a constant determining the magnification of the image generated in the image plane.

Considering the centre of the image plane where :

$xr = yr = 0$ :

$DO$ = depth of surface for a centre image plane ray

$= n/d$ equation 5

Considering an incremental change in xr, the corresponding incremental change in the surface depth is :

$deltaDx = l/(dzr)$ equation 6

Similarly for an incremental change in yr :

$deltaDy = m/(dzr)$ equation 7

Substituting equations 5 to 7 into 4, the surface depth D for a ray passing through a point (xr, yr, zr) is:

$D = (deltaDx)xr + (deltaDy)yr + DO$ equation 8

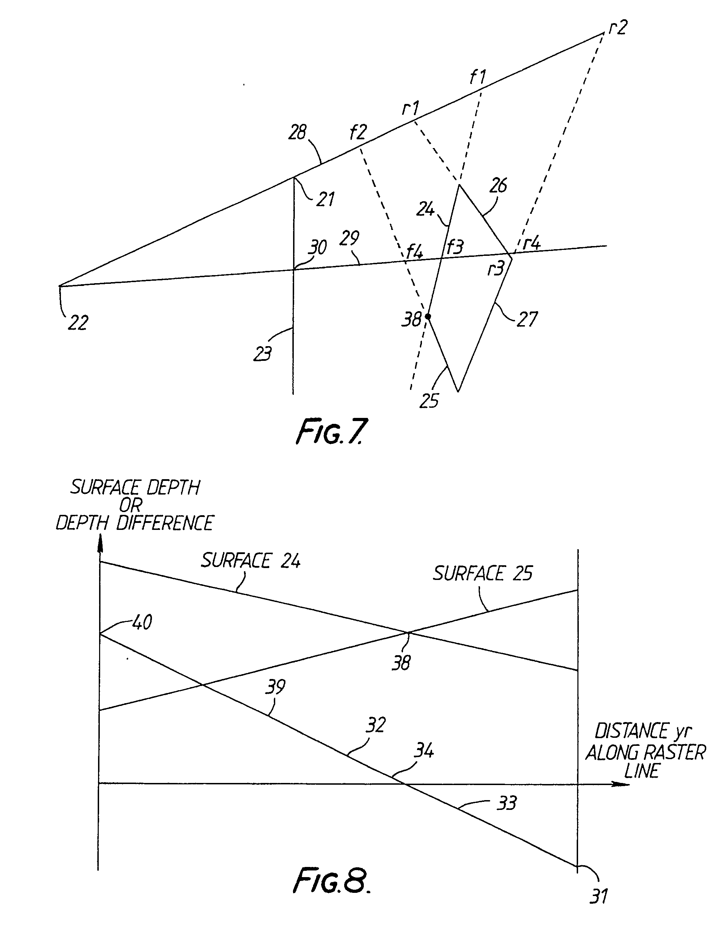

Consider now the set of image plane points on a raster line for which xr is a constant. Equation 8 is used to determine the start depths of all surfaces of a phrase at an initial value of yr, 21, as illustrated in Figure 7. This Figure illustrates a cross section formed by the intersection of the plane containing the eye point 22, and the selected raster line 23, with the phrase of which forward faces 24, 25 and reverse faces 26, 27 are shown.

The ray 28 passing through the initial yr point 21 intersects the planes of the faces of the phrase at points f1, f2, r1, r2 where f indicates forward, r indicates reverse, faces. The surface depth at these points is computed using equation 8 and these depths are in the same order namely f2, r1, f1 and r2. The forward surface intersection farthest from the eye point is f1 and the reverse surface intersection closest to the eye point is r1. The condition that the farthest forward surface intersection f1 is farther from the eye point than the closest reverse surface intersection r1 denotes that ray 28 does not intersect the phrase. Comparison of the surface depths for this ray allows the condition to be evaluated.

The surface depths for ray 29 are determined from those for ray 28 by adding the appropriate multiples of deltaDy as indicated by equation 8. This ray intersects the planes of the faces in points f3, f4, r3 and r4 where the surface depths indicate that f3, the forward face farthest from the eye point, is closer than r3, the reverse face closest to the eye point. This condition signifies that ray 29 intersects the phrase and that surface 24 is visible, assuming no other phrases nearer the eye point.

On reaching the end point of the selected raster line 23, the surface depths at the start of the next raster line are determined by adding the appropriate increments deltaDx to the surface depths at the start of the raster line just processed. US-A-3,889,107 discloses a method of computing the point of intersection of two surfaces by dissecting polygons along the cutting plane. The method proposes dividing polygons by lines of intersection as a means of solving the hidden surface problem but does not enable determination of the line of intersection.

In its preferred embodiments, this invention is concerned with circuits and methods which permit the ray tracing method to make full use of the coherency provided by edge data.

The purpose of these embodiments is to use the surface depth information to determine the intersection points of surfaces forming an edge on each raster line in turn, so drastically reducing the processing required to generate an image.

An object of the present invention is to provide an improved intersection computer and method therefor which, in a preferred embodiment thereof, can improve an image generated from a mathematical model defined as a planar surface approximation of a physical object.

EP 0 207 790 B1

According to one aspect of the present invention there is provided a method for determining a point of intersection of two linear functions both of which vary in accordance with the same independent variable, comprising a plurality of first processes, of which at least one first process comprises steps of :

storing a difference in value of the two functions for a defined value of the independent variable, as a first stored value,

storing a difference in incremental values of the two functions for a defined incremental value of the independant variable, as a second stored value, which defined incremental value of the independent variable corresponds to a range of values of the independent variable within which the point of intersection of the two functions is expected,

comparing the polarity of the first and second stored values,

storing the comparison result and also accumulating the comparison result,

adding or differencing, according to the comparison result, the first and second stored values,

processing the second stored value and/or the result of said adding or differencing, so as to halve the ratio of the second stored value to the result of said adding or differencing,

storing the result of said adding or differencing, or, if processed, the value derived therefrom, as a first stored value of a following first process,

storing the second stored value, or, if processed, the value derived therefrom, as a second stored value of a following first process,

such that the difference in value of the two functions and the difference in incremental value of the two functions are added, differenced and processed in the same manner in successive first processes, whereby upon completion of said plurality of first processes, an approximation to the value of the independent variable at the intersection point with a known limit of error is obtained by accumulating the results of comparisons of respective first and second stored values of each first process.

According to another aspect of the present invention, there is provided a circuit for determining the point of intersection of two linear functions both of which vary in accordance with the same independent variable, which circuit comprises a plurality of cells arranged in series, each cell including :

a first store or latch means for holding the difference in value of the two said functions for a defined value of the said independent variable,

a second store or latch means for holding the difference in incremental values of the two said functions for a defined incremental value of the said independent variable, which defined incremental value corresponds to the range of independent variable values within which the said point of intersection is expected,

comparison means for comparing the polarity of the values held in said stores, a latch means for holding the result of said comparison and for supplying a comparison signal to both a means for accumulating the value of the said independent variable at the point of intersection and also to an arithmetic circuit which, according to the said comparison signal supplied to it, either adds or differences the contents of the previously defined stores, and

processing means for processing the contents of the second store and/or the result so as to double said result of said adding or differencing relative to the value from the second store

wherein, in use,

the value from the second store is supplied to the second store or latch means of the following cell, and the result of said adding or differencing is supplied to the first store or latch means of the following cell, the said difference in value of the two functions and the difference in incremental value of the two functions being added, differenced and processed in the same manner on passing through the said series of cells whereby, on passing through the last of the cells, the value accumulated from the outputs of said polarity comparisons is an approximation to the value of the independent variable at the intersection point with a known limit of error.

In an embodiment of the present invention, having set the states of the sign comparison means by the passage through the plurality of cells of the aforementioned difference in value and the difference in incremental value of the two said functions, the supplying of the absolute value of a function for the said defined value of the independent variable to the first store of the first cell and the incremental value of the said function for the said defined incremental value of the said independent variable to the second store of the first cell provides, on passage through the plurality of cells, the absolute value of the said function at the previously determined intersection point as output from the last cell.

In an embodiment of the present invention, a new intersection signal is supplied, such signal distinguishing between the supplying of difference values used to operate the means of latching the outputs of the previously described polarity comparison latch outputs and the supplying of absolute values used to determine the value of functions at the intersection point.

4

In an embodiment of the present invention, control means is provided which, on receipt of said new intersection signal and a continuous sequence of clock pulses, generates and supplies timing signals to the latches to hold the outputs of said polarity comparators and also to the means of accumulating said outputs in synchronisation with the passage of function difference values down the plurality of cells, generates and supplies additional timing signals to the stores in the plurality of cells to cause the transfer of function difference values from a preceding to a following cell and which circuit thereafter generates and supplies timing signals to the stores in the plurality of cells to cause the transfer of function absolute values from a preceding to a following cell whilst preventing changes to the contents of the said polarity comparison latches, and which circuit generates and supplies timing signals to the means of accumulating the said polarity comparison bits and to said first store of the final cell to output the value of the intersection point and function values.

In an embodiment of the present invention, the control means generates and supplies a plurality of timing signals to a corresponding plurality of latches to hold the outputs of the polarity comparators and also to a corresponding plurality of means of accumulating said outputs to output the accumulated values from the said means, so that each corresponding set of latches and accumulating means also corresponds to one of several intersection values simultaneously being computed by the circuit.

In an embodiment of the present invention, the control means performs its and generating and supplying according to a value defining the number of cells to be made active in the pipeline, such value being supplied with time as the new intersection signal, to the plurality of cells so that the pipeline functions with the defined number of cells, the circuit also being adapted to supply the output of each arithmetic unit in the pipeline to a means of selecting any of its input signals for output, such selection means being controlled by signals supplied by the control means.

In an embodiment of the present invention, the linear functions relate a point in an image plane to the projection onto an axis perpendicular to the image plane of a ray starting from the observer's eye point, passing through the said image plane point and terminating intersecting a surface, such projection referred to as surface depth, which circuit determines, for a specified line in the image plane, the point of intersection of two such surfaces along the specified line and subsequently determines the depths of a plurality of specified surfaces at the determined intersection point.

In an embodiment of the present invention, the linear functions relate a point in an image plane to increments in surface depths, which circuit determines, for a specified line in the image plane, the increment in point of intersection of two such surfaces, which, when added to a previously determined intersection point on an image plane line, determines the intersection point on a parallel but displaced image plane line and subsequently determines the depth increments of a plurality of specified surfaces, such increments, when added to the corresponding surface depths at the previously determined intersection point determining the surface depths at the new intersection point.

Reference is made, by way of example, to the accompanying drawings in which :

Figure 1 is a schematic view illustrating a known method for generating an image from a mathematical model ;

Figure 2 is a schematic view of an image plane in the method of Figure 1 ;

Figure 3 is a schematic view illustrating a ray tracing method for generating an image from a mathematical model ;

Figure 4 shows examples of convex shapes used in a mathematical model ;

Figure 5 shows an example of a shape containing a concavity ;

Figure 6 is a schematic view for explaining the ray tracing method for generating an image from a mathematical model ;

Figure 7 is a schematic view for explaining the principle of the present invention ;

Figure 8 is a graph for explaining the principle of the present invention ;

Figure 9 is a block circuit diagram of a first embodiment of the present invention ; and

Figure 10 is a block circuit diagram of a second embodiment of the present invention.

The basis of the invention is now described. With reference to Figure 7 the variations of depths of surfaces 24 and 25 are as shown in Figure 8. The edge 38 formed by the intersection of these two surfaces occurs where the depths are equal.

39 shows the variation of the difference in depths between surfaces 24 and 25, the edge occurring where this line passes through zero. The start difference in depths, 40, is determined using equation 8. A difference in depth increments for a range of values yr corresponding to the length of the raster line is also determined.

Adding the difference in depth increments to the start difference determines the depth difference at the end point 31 of the raster line. If the end and start point depth differences have opposite signs then an edge exists within the selected length of raster line.

By successively halving the depth difference increment and either adding or subtracting this to the depth difference so far accumulated, a succession of surface depth differences 32, 33, 34 which are continually approaching the desired depth difference at the edge 38 are determined. This technique is a well known binary search method.

The sequence of additions and subtractions can be recorded as a binary number where, for example, 1 corresponds to add, 0 to subtract, and the most significant bit corresponds to the initial increment to be added to determine the end point depth difference from the start point depth difference, that is to move the point of interest from one end of the raster line to the other.

For illustration consider a raster line 256 units in length. A binary number 11010011 resulting from the binary search would be interpreted as :

```
1          move point of interest + 128 units

1          move point of interest +  64 units

0          move point of interest -  32 units

1          move point of interest +  16 units

0          move point of interest -   8 units

0          move point of interest -   4 units

1          move point of interest +   2 units

1          move point of interest +   1 unit
```

The point of interest is moved a total of 167 units which is within 1 unit of the required edge. 167 expressed as a binary number is 10100111, which is formed by moving the most significant bit of the first binary number to the least significant position while simultaneously increasing the significance of all other bits by a factor of two.

Furthermore, if the first binary word is also used to control the addition or subtraction of surface depth increments to a depth value corresponding to the start of the raster line, the resultant value accumulated is the surface depth at the intersection point. Continuing the example the binary number 11010011 causes the following sequence :

```
1    add to start depth an increment
     corresponding to                              128 units
1    add to accumulated depth an
     increment corresponding to                     64 units
0    take from accumulated depth an
     increment corresponding to                     32 units
1    add to accumulated depth an
     increment corresponding to                     16 units
0    take from accumulated depth an
     increment corresponding to                      8 units
0    take from accumulated depth an
     increment corresponding to                      4 units
1    add to accumulated depth an
     increment corresponding to                      2 units
1    add to accumulated depth an
     increment corresponding to                      1 unit
```

6

A further purpose of the embodiment is to determine the depth of surfaces at each edge previously determined.

According to one embodiment of the invention, the method outlined above for determining an intersection point of an edge with a raster line, can be carried out by logic circuitry. As will be clear from the above, the method comprises steps of comparing, adding, subtracting, dividing or multiplying, and accumulating values of depth differences and/or depth difference increments. Each of these steps can be performed by logic circuits such as comparators, adder/subtractors, shifters, and stores or latches, respectively.

According to an embodiment of the invention, circuits are arranged in a pipeline, consisting of an arrangement of identical cells, each cell comprising 2 stores, a comparator, adder/subtractor, shifter and comparator output latch. The circuits also contain control logic. The number of cells in the pipeline determines the accuracy to which the calculation of the intersection point is to be determined.

The pipeline is first primed with the difference in depths, at a specified point on the raster line, between two surfaces which intersect to form an edge and the difference in either the x or y depth increments scaled by the length of raster line within which the search for the intersection point is to be restricted. The x or y depth increments are selected according to the direction of the raster and, although the invention will permit any direction of raster, discussion will hereafter be restricted to lines in the y direction.

At the same time the control logic is signalled to start processing for a new edge calculation. This causes the output of the comparator, which compares the signs of the depth and depth increment differences, to be latched into the comparator output latch of the first cell of the pipeline. Thereafter, until a new edge is signalled, the latch output does not change.

The latch output determines the mode of operation of the adder/subtractor. When the signs of the depth and depth increment differences are the same the adder/subtractor is set to subtract, otherwise to add.

On the next cycle of the pipeline the contents of the two stores are summed or differenced according to the setting of the adder/subtractor previously described and the result is stored in the first store of the second cell. At the same time the contents of the surface depth increment difference store of the first cell is output, halved relative to the result from the adder/subtractor (for example by dividing the surface depth increment difference by two) and stored in the corresponding store of the second cell. In addition the control circuit ensures the sign comparator output of the second cell is latched into its comparator output latch thereby setting the mode of operation of the adder/subtractor of the second cell. Also the contents of the data in the two stores of the first cell are overwritten with data to be described later. As described previously for the first cell, the output data of the comparator latch of the second cell thereafter remains constant until the control circuit indicates a new edge.

The process described for data passing down the pipeline from cell 1 to cell 2 is repeated for subsequent cells until the end of the pipeline is reached, which event is flagged by the control circuit. At this instant the modes of operation of the adder/subtractors of all cells reflect the binary search performed to determine the desired point of intersection. In addition, the comparator output latch contents are transferred to consecutive bits of an offset store, with the contents of the first, second, third and last cell's comparator output latches forming the least, most, next most and next least significant bits respectively. The contents of the offset store represent the offset, in raster co-ordinates from the specified point on the raster line at which the difference in depths was used to prime the pipeline. Thus the desired intersection point is determined.

On the second and subsequent cycles of the pipeline processing, start depth and y depth increment values for selected surfaces are sequentially loaded into the first and second stores of the first cell. As this data passes down the pipeline, the appropriate increments are added or subtracted according to the comparator output latch settings established during the priming process previously described. The value that emerges from the pipeline is the depth value for the selected surface at the previously determined point of intersection.

To minimise cost and to provide real time operation the resolution of a computer image generator is limited. Thus, for example, the image plane into which the mathematical model is projected is not treated as a continuous plane but is quantized into a set of sample points called pixel points. The lines of pixel points correspond to the centres of the raster lines of the display system. The pixel points are normally evenly distributed along the raster line. The image generator determines the surface closest to the observer at each pixel point and displays the colour of that surface from that point until the next pixel point. The quantisation process causes aliasing effects which manifest themselves as jagged edges and surfaces that break up or disappear when they become smaller than a pixel which is the distance between two pixel points. A well known technique, called anti-aliasing, for minimising these visual effects computes the surface colours at sub-pixel points which colours are subsequently averaged according to a specified weighting.

In an embodiment of the invention, there is provided a second pipeline, identical to that previously described, but primed with the x and y depth increment differences between the same two surfaces as for the first pipeline. On the second and subsequent pipeline cycles, the two stores of the second pipeline are loaded with the same start depth and y depth increment data as for the first pipeline.

On completing the priming of the second pipeline, the comparator output latch contents are transferred to an increment offset store. The contents of this store determine the offset to be added to the increment store of the first pipeline to determine the edge intersection point of the two surfaces in question on a neighbouring raster line displaced one pixel from the previous raster line. This increment may be divided by any desired factor to determine the increment offsets for any corresponding sub-raster line. As previously stated, the number of cells in the two pipelines determines the resolution to any desired sub-pixel level of the line offset and offset increment values computed by the processing.

On passing the surface depth and y depth increment data through the second primed pipeline, the processors generate the increments to be added to each specified surface depth to determine the surface depth at the intersection point on the neighbouring raster line. The increments may also be divided to provide sub-raster information. Thus by dividing and repeatedly adding the outputs of this second pipeline to the first, a number of parallel streams of surface depth data can be generated with each stream corresponding to a sub raster line.

It will be understood that such an embodiment of the invention would be used only in a case in which an anti-aliasing process was required to be incorporated in an image generator. In other embodiments of the invention, the use of the anti-aliasing technique as explained above may be omitted whilst still providing a viable image generator.

Although previous discussion of the invention has used image generation as an example of use, it is noted that the technique may be used to determine the intersection point of any two linear functions.

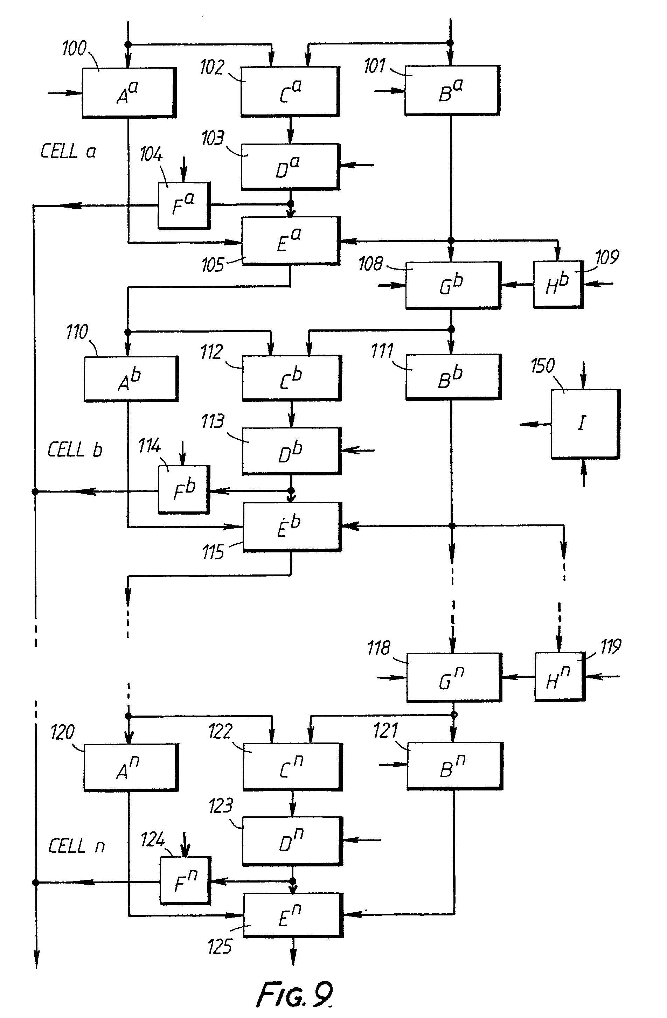

In order to understand an embodiment of the invention more fully, a single pipeline of processors is, with reference to Figure 9, described in more detail. To reduce circuit complexity the pipeline is realised as a serial process in this embodiment. Parallel processing could, however, be employed. Also, for simplicity, it is assumed that the surface depths and depth increments are defined as 16-bit words. The invention can accommodate any word length and data format including floating point representation.

Figure 9 shows a block diagram of the circuit for a pipeline in this embodiment of the invention. The Figure shows the first, second and last cells of the pipeline, all other cells being exact copies of the second.

The first cell, cell a, comprises elements 100 to 105 inclusive. The second and all subsequent cells, cell b to cell n, contain two additional units as illustrated by elements 108 and 109 for cell b and elements 118 and 119 for cell n.

Data is supplied as a serial stream of bits to the shift register stores, elements 100 and 101, with the least significant bit being entered first and the most significant bit last. The data is expressed in the form of a 2's complement signed integer and the most significant bit represents the sign of the number.

The timing of the action of the units of cell a and of all other cells is controlled by the timing logic unit, element 150. For reasons to be described the clocking of 16 bit data is based on a 17 clock cycle. When data for a new edge is to be processed, the difference of the surface depths and the difference in the surface depth increments is applied to element 100 and 101 respectively and, at the same time, a new edge signal is applied to the timing logic unit, element 150, which proceeds to generate, as well as normal clocking signals, a series of signals occurring every 16th clock cycle, which signals are demultiplexed to operate in turn the latch elements 103, 113 until element 123, thereby priming the pipeline. The new edge signal also initiates the generation of a series of demultiplexed clock pulses, coincident with each 17th clock pulse to sequentially open gate units, elements 104, 114 until 124 to output the intersection point offset value, in the order least, most, next most until next least significant bits.

The invention can accommodate a case where the pipeline has not completed its priming process before a new edge to be processed is signalled. Under these conditions more than one gate unit, elements 104, 114 until 124 may be simultaneously opened causing corruption of data on the single intersection point output line. The timing logic unit, element 150, is expanded to generate a multiple of gate control signals, each signal related to a particular edge in the pipeline. Also each of the gate units, elements 104, 114 until 124 is replaced by the same multiplicity of identical gate units with corresponding units of each cell connected to a separate output line. By means of enabling the appropriate gates, the multiple intersection data are routed to independent output lines.

The invention can also accommodate a case where the number of cells in the pipeline needs to be adjusted according to a pipeline length value associated with the new edge signal. Under these conditions, the output of each shift register add/substract unit, elements 105, 115 until 125 is supplied to an additional multiplexer unit which unit supplies the surface depth outputs of the circuit. The pipeline length value is supplied to the timing logic unit which as a result generates the control signals at times corresponding to the required length of pipeline, as well as supplying an additional control signal to the said additional multiplexer to output the required surface depth values.

The timing logic unit, element 150, normally generates groups of 16 clock pulses with the 17th clock pulse suppressed, by which means data is simultaneously clocked in and out of half of the shift registers, namely elements 100, 110 until element 120, in the system.

The shift registers storing increment difference and subsequently increment data, namely elements 101, 111 until element 121, have groups of 17 clock pulses applied, that is, the 17th clock pulse is not suppressed. The timing logic unit, element 150 generates a signal during the first 16 clock pulses to cause the selectors, elements 108 until 118, to pass data clocked out from shift registers, elements 101, 111 directed to subsequent shift registers 111 until 121. Thus data is passed down the pipeline of shift registers 101, 111 until 121. The timing logic unit, however, generates signals so that, during the 16th clock pulse, the sign bits of data being clocked into shift registers, elements 111 until 121 are also clocked into latches 109 until 119. During the 17th clock pulse, the timing logic unit generates signals to cause the selector units, elements 108 until 118 to pass the outputs of latch units, elements 109 until 119 to the shift register units, elements 111 until 121, which units are at the same time being clocked. In this embodiment the contents of shift register units, elements 101 and 111, are shifted from most significant bit towards least significant bit by one position with the sign bit being duplicated into the now vacant most significant bit, so dividing by 2 the contents of each preceding shift register unit, elements 101, 111 as it is clocked into the following shift register units, elements 111 until 121. Thus the ratio of the value in register 101 to the value output by the add/subtract unit 105 is halved.

Having detailed the operation of specific elements of the circuit, in the embodiment of Figure 9, its overall operation is now described.

On the start of processing for a new edge, a new edge signal is applied to the timing logic unit, element 150. During the next 16 clock cycles, surface depth and depth increment difference data is clocked into the shift register units, elements 100 and 101 respectively. During the 16th clock cycle the output of the sign comparator unit, element 102, is clocked into the sign comparator latch unit, element 103, whose output selects the mode of operation of the serial, 2's complement, signed adder/subtractor unit, element 105. During the 17th clock cycle, the clock signals to the shift register units, elements 100, 101 are inhibited, but a signal is applied to gate unit, element 104, to output the least significant bit of the intersection value.

During clock cycles 18 to 33 surface depth and depth increment data is clocked into shift register units, elements 100 and 101 respectively. At the same time, the surface depth and depth increment difference data previously contained in these registers is clocked out, added or differenced according to the contents of the sign comparator latch unit, element 103, and the result is clocked into the following shift register unit, element 110. At the same time, the depth increment difference data contained in register unit, element 101 is clocked, via selector unit 108, into register unit 111.

During clock cycle 33, the sign bits of the values being clocked into shift register units 110 and 111, are compared by the sign comparator unit 112, and clocked into latch unit 113. In addition the sign bit of the value being clocked into the register unit 111 is clocked into the sign latch unit 109.

During clock cycle 34, the selector unit 108 is switched to select the output of the sign latch unit, element 109, which output is clocked into shift register unit 111. At the same time a signal is applied to gate unit 114, to output the most significant bit of the intersection value.

The process described above is repeated with data passing from one cell to the following cell during 17 clock cycles until all sign comparator latch units, elements 103, 113 until 123 are set at which time the pipeline is fully primed and the intersection point data has been output.

During subsequent periods of 17 clock cycles, the data clocked out from shift register unit 125 represents the depth at the intersection point of the surfaces corresponding to the surface data applied to the pipeline following the new edge priming data.

In the above-described embodiment of the invention, contents of the shift registers 101, 111, are divided by two, so as to halve the values therefrom relative to the values output by the add/subtract units 105, 115 ... Alternatively, in another embodiment of the invention, the values output by the add/subtract units 105, 115,... may be multiplied by two before being passed to the next cell, and the values from the shift registers 101, 111,... passed on directly, achieving an equivalent effect.

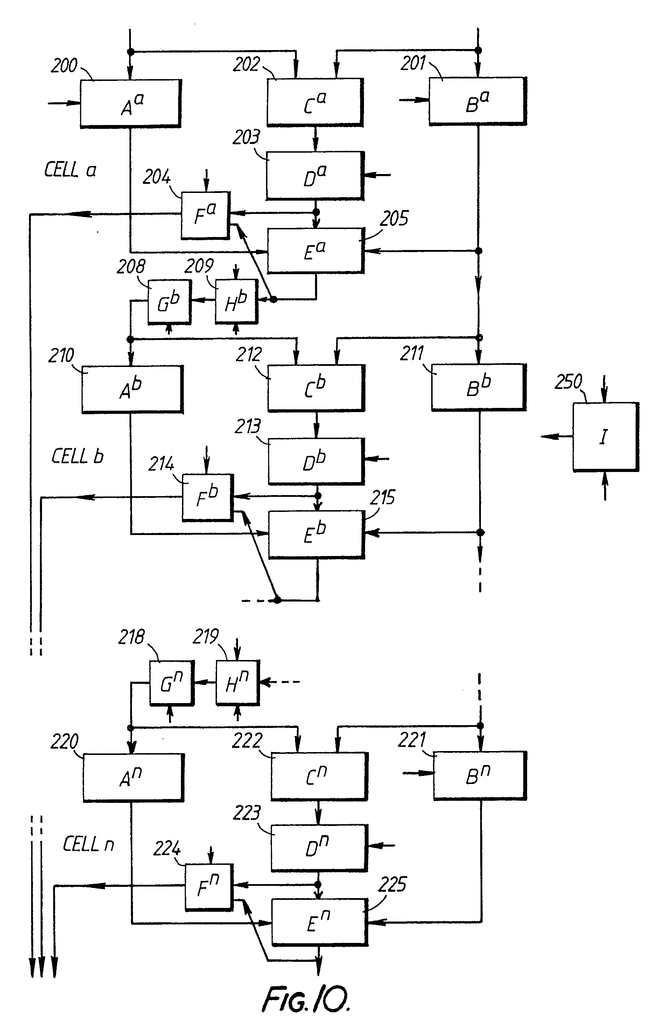

Figure 10 shows a block diagram of a circuit for a pipeline in such an embodiment of the invention. The Figure shows the first, second and last cells of the pipeline, all other cells being exact copies of the second.

The first cell, cell a, comprises elements 200 to 205 inclusive. The second and all subsequent cells, cell b to cell n, contain two additional units as illustrated by elements 208 and 209 for cell b and elements 218 and 219 for cell n.

Data is supplied as a serial stream of bits to the shift register stores, elements 200 and 201, with the least significant bit being entered first and the most significant bit last. The data is expressed in the form of a 2's complement signed integer and the most significant bit represents the sign of the number.

The timing of the action of the units of cell a and of all other cells is controlled by the timing logic unit, element 250. For reasons to be described the clocking of 16 bit data is based on a 16 clock cycle. When data for a new edge is to be processed, the difference of the surface depths and the difference in the surface depth increments is applied to element 200 and 201 respectively and, at the same time, a new edge signal is applied to the timing logic unit 250, which proceeds to generate, as well as normal clocking signals, a series of signals occurring every 16th clock cycle, which signals are demultiplexed to operate in turn the latch elements 203, 213 until element 223, thereby priming the pipeline. The new edge signal also initiates the generation of a series of demultiplexed clock pulses, coincident with each 1st clock pulse, following a delay of 16 clock pulses, to sequentially select the output of the latch elements 203 until 223 and to open the selector/gate units, elements 204, 214 until 224 to output the intersection point offset value, in the order least, most, next most until next least significant bits.

The arrangement shown in Figure 10 avoids the problem of output data corruption that may occur with the arrangement shown in Figure 9 by using a separate line for each output. The same separate output lines permit adjustment of the length of the pipeline for each new edge signal if required.

The timing logic unit 250, normally generates groups of 16 clock pulses by which means data is simultaneously clocked in and out of half of the shift registers, namely elements 200, 210 until element 220, and elements 201, 211 until element 221 in the system.

The timing logic unit, element 250, generates a signal during the 16th clock pulse to cause the selector elements 209 to 219 to pass data corresponding to a value zero to the latch elements 208 to 218. The timing logic unit 250, generates signals during 16 clock pulses of each cycle to pass data clocked out from shift registers elements 200, 201, 210, 211 through the adder/subtractor units, elements 205, 215, selector units, elements 209, until 219 and latch units, elements 208 until 218 into the subsequent shift registers, elements 210 until 220. The effect of the additional latch units 208 until 218 is to cause a zero to be entered into the least significant bits of the shift registers, elements 210 until 220, and the least significant 15 bits of the output of the adder/subtractor units 205, 215 to be written into the most significant 15 bits of the shift registers 210 until 220. Thus the result of each adder/subtractor unit is multiplied by 2.

Having detailed the operation of specific elements of the circuit, in the embodiment of Figure 10, its overall operation is now described.

On the start of processing for a new edge, a new edge signal is applied to the timing logic unit 250. During the next 16 clock cycles, surface depth and depth increment difference data is clocked into the shift register units, elements 200 and 201. During the 16th clock cycle the output of the sign comparator unit 202, is clocked into the sign comparator latch unit 203, whose output selects the mode of operation of the serial, 2's complement, signed adder/subtractor unit 205. During the 16th clock cycle a signal is applied to the selector/gate unit 204, to output the contents of the sign comparator latch unit 203 as the least significant bit of the intersection value. Also during the 16th clock cycle a zero is selected by the selector, element 209, which is latched into the latch 208.

During clock cycles 17 to 32 surface depth and depth increment data is clocked into shift register units 200 and 201 respectively. At the same time, the surface depth and depth increment difference data previously contained in these registers is clocked out, added or differenced according to the contents of the sign comparator latch unit 203, and the result is clocked through the selector unit 209 into the latch unit 208 and the following shift register unit, element 210. At the same time, the depth increment difference data contained in register unit 201 is clocked into register unit 211. During clock cycle 32 a zero is selected by selector unit elements 209 until 219 and latched into latch units 208 until 218.

Also during clock cycle 32 a signal is applied to gate/selector elements 204 and 214 to select the output of the adder/subtractor units 205 and 215, and output as the least significant bit of the depth value and the most significant bit of the intersection point respectively.

During clock cycle 32, the sign bits of the values being clocked into shift register units 210 and 211 are compared by the sign comparator unit 212, and clocked into latch unit 213.

The process described above is repeated with data passing from one cell to the following cell during 16 clock cycles until all sign comparator latch units 203, 213 until 223 are set, at which time the pipeline is fully primed and the intersection point data has been output.

During subsequent periods of 16 clock cycles the data output from the selector/gate units 204 until 224, represents the depth at the intersection point of the surfaces corresponding to the surface data applied to the pipeline following the new edge priming data.

Although the invention has been described specifically in its application to the generation of visual images by digital processing using the ray tracing technique, it will be appreciated that it can be applied to many other situations in which one wishes to find the point of intersection of two linear functions dependent on the same independent variable.

## Claims

1. A method for determining a point of intersection of two linear functions both of which vary in accordance with the same independent variable, comprising a plurality of first processes, of which at least one first process comprises steps of :

storing a difference in value of the two functions for a defined value of the independent variable, as a first stored value,

storing a difference in incremental values of the two functions for a defined incremental value of the independent variable, as a second stored value, which defined incremental value of the independent variable corresponds to a range of values of the independent variable within which the point of intersection of the two functions is expected,

comparing the polarity of the first and second stored values,

storing the comparison result and also accumulating the comparison result,

adding or differencing, according to the comparison result, the first and second stored values,

processing the second stored value and/or the result of said adding or differencing, so as to halve the ratio of the second stored value to the result of said adding or differencing,

storing the result of said adding or differencing, or, if processed, the value derived therefrom, as a first stored value of a following first process,

storing the second stored value, or, if processed, the value derived therefrom, as a second stored value of a following first process,

such that the difference in value of the two functions and the difference in incremental value of the two functions are added, differenced and processed in the same manner in successive first processes, whereby upon completion of said plurality of first processes, an approximation to the value of the independent variable at the intersection point with a known limit of error is obtained by accumulating the results of comparisons of respective first and second stored values of each first process.

2. A method as claimed in claim 1, wherein said processing comprises dividing the second stored value by two.

3. A method as claimed in claim 1, wherein said processing comprises multiplying the result of said adding or differencing by two.

4. A method as claimed in claim 1, 2 or 3, further comprising a plurality of second processes corresponding respectively to said first processes, at least one of the second processes comprising steps of :

storing an absolute value of a function for the defined value of the independent variable, as a first stored value,

storing an incremental value of said function for the defined value of the independent variable, as a second stored value,

adding or differencing, according to the comparison result of the corresponding first process, the first and second stored values,

processing the second stored value and/or the result of said adding or differencing, so as to halve the ratio of the second stored value to the result of said adding or differencing,

storing the result of said adding or differencing, or, if processed, the value derived therefrom, as a first stored value of a following second process,

storing the second stored value, or, if processed, the value derived therefrom, as a second stored value of a following second process,

such that there is obtained, as output from a final one of the second processes, the absolute value of said function at the previously determined intersection point.

5. A method as claimed in any preceding claim, wherein the linear functions relate a point in an image plane to the projection onto an axis perpendicular to the image plane of a ray starting from an observer's eye point, passing through the said image plane point and terminating on intersecting a surface, said projection constituting a surface depth, and wherein the method determines, for a specified line in the image plane, the point of intersection of two such surfaces along the specified line and subsequently determines the depths of a plurality of specified surfaces at the determined intersection point.

6. A method as claimed in any preceding claim, wherein the linear functions relate a point in an image plane to increments in surface depths and wherein the method determines, for a specified line in the image plane, an increment in point of intersection of two such surfaces, which, when added to a previously determined intersection point on an image plane line, determines the intersection point on a parallel but displaced image plane line and subsequently determines the depth increments of a plurality of specified surfaces which, when added to the corresponding surface depths at the previously determined intersection point determine the surface depths at the new intersection point.

7. A circuit for determining the point of intersection of two linear functions both of which vary in accordance with the same independent variable, which circuit comprises a plurality of cells (CELL a ... CELL n) arranged in series, each cell including :

a first store or latch means (100, 110, ... ; 200, 210, ...) for holding the difference in value of the two said functions for a defined value of the said independent variable,

a second store or latch means (101, 111, ... ; 201, 211, ...) for holding the difference in incremental values of the two said functions for a defined incremental value of the said independent variable, which defined incremental value corresponds to the range of independent variable values within which the said point of intersection is expected,

comparison means (102, 112, ... ; 202, 212, ...) for comparing the polarity of the values held in said stores, a latch means (103, 113, ... ; 203, 213, ...) for holding the result of said comparison and for supplying a comparison signal to both a means for accumulating the value of the said independent variable at the point of intersection and also to an arithmetic circuit (105, 115, ... 205, 215, ...) which, according to the said comparison signal supplied to it, either adds or differences the contents of the previously defined stores, and

processing means (108, ..., 118 ; 209, 208, ..., 219, 218) for processing the contents of the second store and/or the result of said adding or differencing so as to double said result relative to the value from the second store (101, 111, ... ; 201, 211, ...)

wherein, in use,

the value from the second store (101, 111, ... ; 201, 211, ...) is supplied to the second store or latch means (111, ..., 121 ; 211, ..., 221) of the following cell, and

the result of said adding or differencing is supplied to the first store or latch means means (110, ..., 120; 210, ... ; 220) of the following cell,

the said difference in value of the two functions and the difference in incremental value of the two functions being added, differenced and processed in the same manner on passing through the said series of cells (CELL a ... CELL n) whereby, on passing through the last of the cells, the value accumulated from the outputs of said polarity comparisons is an approximation to the value of the independent variable at the intersection point with a known limit of error.

8. A circuit as claimed in claim 7, wherein said processing means (108, ..., 118) is operable to divide the contents of the second store (101, 111, ...) by a factor of two and to supply the divided value to the second store or latch means (111, ..., 121) of the following cell.

9. A circuit as claimed in claim 7, wherein said processing means (209, 208, ..., 219, 218) is operable to multiply the result of said adding or differencing by a factor of two and to supply the multiplied value to the first store or latch means (210, ..., 220) of the following cell.

10. A circuit according to claim 7, 8 or 9, wherein, in use, after setting the states of the sign comparison means (102, 112, ... ; 202, 212, ...) by the passage through the plurality of cells (CELL a ... CELL n) of the aforementioned difference in value and the difference in incremental value of the two said functions, there is supplied the absolute value of a function for the said defined value of the independent variable to the first store (100, 200) of the first cell (CELL a) and the incremental value of the said function for the said defined incremental value of the said independent variable to the second store (101, 201) of the first cell whereby there is obtained, on passage through the plurality of cells, the absolute value of the said function at the previously determined intersection point as output from the last cell (CELL n).

11. A circuit as claimed in any one of claims 7 to 10 wherein, in use, a new intersection signal is supplied, such signal being used to distinguish between the supplying of difference values used to operate the means of latching the outputs of the previously described polarity comparison latch outputs and the supplying of absolute values used to determine the value of functions at the intersection point.

12. A circuit as claimed in any one of claims 7 to 11, wherein control means (150, 250) is provided which in use, on receipt of said new intersection signal and a continuous sequence of clock pulses, generates and supplies timing signals to the latches (103, 113, ... ; 203, 213, ...) to hold the outputs of said polarity comparators (102, 112, ... ; 202, 212, ...) and also to the means of accumulating said outputs in synchronisation with the passage of function difference values down the plurality of cells, generates and supplies additional timing signals to the stores in the plurality of cells (CELL a ... CELL n to cause the transfer of function difference values from a preceding to a following cell and which circuit thereafter generates and supplies timing signals to the stores (100, 110, ... 101, 111, ... ; 200, 210, ... 201, 211) in the plurality of cells to cause the transfer of function absolute values from a preceding to a following cell whilst preventing

EP 0 207 790 B1

changes to the contents of the said polarity comparison latches (102, 112, ... ; 202, 212, ...) and, which circuit generates and supplies timing signals to the means of accumulating the said polarity comparison bits and to said first store (220) of the final cell (CELL n) to output the value of the intersection point and function values.

13. A circuit as claimed in claim 12 wherein, in use, the control means (150, 250) generates and supplies a plurality of timing signals to a corresponding plurality of latches (103, 113, ... ; 203, 213, ...) to hold the outputs of the polarity comparators (102, 112, ... ; 202, 212, ...) and also to a corresponding plurality of means of accumulating said outputs to output the accumulated values from the said means, so that each corresponding set of latches and accumulating means also corresponds to one of several intersection values simultaneously being computed by the circuit.

14. A circuit as claimed in claim 12 or 13 wherein, in use, the control means performs said generating and supplying according to a value defining the number of cells to be made active in the pipeline, such value being supplied with time as the new intersection signal, to the plurality of cells so that the pipeline functions with the defined number of cells, the circuit also being adapted to supply the output of each arithmetic unit (105, 115, ... ; 205, 215, ...) in the pipeline to a means of selecting any of its input signals for output, such selection means being controlled by signals supplied by the control means.

15. A circuit as claimed in any one of claims 7 to 14, wherein the linear functions relate a point in an image plane to the projection onto an axis perpendicular to the image plane of a ray starting from the observer's eye point, passing through the said image plane point and terminating on intersecting a surface, such projection referred to as surface depth, which circuit determines, for a specified line in the image plane, the point of intersection of two such surfaces along the specified line and subsequently determines the depths of a plurality of specified surfaces at the determined intersection point.

16. A circuit as claimed in any one of claims 7 to 15, wherein the linear functions relate a point in an image plane to increments in surface depths, which circuit determines, for a specified line in the image plane, the increment in point of intersection of two such surfaces, which, when added to a previously determined intersection point on an image plane line, determines the intersection point on a parallel but displaced image plane line and subsequently determines the depth increments of a plurality of specified surfaces, such increments, when added to the corresponding surface depths at the previously determined intersection point determining the surface depths at the new intersection point.

**Ansprüche**

1. Verfahren zur Bestimmung eines Schnittpunktes von 2 linearen Funktionen, die beide in Abhängigkeit von derselben unabhängigen Variablen variieren, wobei dieses Verfahren eine Vielzahl von ersten Prozessen umfaßt, von denen mindestens einer folgende Stufen besitzt :

Speichern einer Wertdifferenz der beiden Funktionen für einen definierten Wert der unabhängigen Variablen als ersten gespeicherten Wert,

Speichern einer Differenz an Inkrementwerten der beiden Funktionen für einen definierten Inkrementwert der unabhängigen Variablen als einen zweiten gespeicherten Wert, wobei dieser definierte Inkrementwert der unabhängigen Variablen einem Bereich von Werten der unabhängigen Variablen entspricht, innerhalb dessen der Schnittpunkt der beiden Funktionen erwartet wird,

Vergleichen der Polarität des ersten und des zweiten gespeicherten Wertes,

Speichern des Vergleichsergebnisses und Akkumulieren des Vergleichsergebnisses,

Addieren oder Differenzbilden, je nach dem Vergleichsergebnis, des ersten und des zweiten gespeicherten Wertes, Verarbeiten des zweiten gespeicherten Wertes und/oder des Ergebnisses des genannten Addierens oder Differenzbildens, um das Verhältnis des zweiten gespeicherten Wertes zu dem Ergebnis dieses Addierens oder Differenzbildens zu halbieren,

Speichern des Ergebnisses dieses Addierens oder Differenzbildens oder, falls weiterverarbeitet wurde, des sich dabei ergebenden Wertes als ersten gespeicherten Wert eines folgenden ersten Prozesses,

Speichern des zweiten gespeicherten Wertes oder, falls weiterverarbeitet wurde, des daraus abgeleiteten Wertes als einen zweiten gespeicherten Wert eines folgenden ersten Prozesses,

so daß die Wertdifferenz der beiden Funktionen und die Differenz des Inkrementwertes der beiden Funktionen addiert, voneinander abgezogen und verarbeitet werden auf die gleiche Weise in aufeinander folgenden ersten Prozessen, wobei nach Beendigung der Vielzahl dieser ersten Prozesse eine Annäherung an den Wert der unabhängigen Variablen am Schnittpunkt mit einer bekannten Fehlergrenze durch Akkumulieren der Ergebnisse der Vergleiche der entsprechenden ersten und zweiten gespeicherten Werte jedes ersten Prozesses erhalten wird.

13

2. Verfahren nach Anspruch 1, bei dem die Verarbeitung die Division des zweiten gespeicherten Wertes durch zwei umfaßt.

3. Verfahren nach Anspruch 1, bei dem das Verarbeiten das Multiplizieren des Ergebnisses des Addierens oder Differenzbildens mit zwei umfaßt.

4. Verfahren nach Anspruch 1, 2 oder 3, das weiterhin eine Vielzahl von zweiten Verfahren, welche den ersten Verfahren entsprechen, umfaßt, wobei mindestens eines der zweiten Verfahren folgende Stufen aufweist :

Speichern eines absoluten Wertes einer Funktion für den definierten Wert der unabhängigen Variable als ersten Wert, Speichern eines Inkrementwertes der zweiten Funktion für den definierten Wert der unabhängigen Variablen als zweiten gespeicherten Wert,

Addieren oder Differenzbilden, je nach dem Vergleichsergebnis des entsprechenden ersten Prozesses, der ersten und zweiten gespeicherten Werte,

Verarbeiten des zweiten gespeicherten Wertes und/oder des Ergebnisses des Addierens oder Differenzbildens, um das Verhältnis des zweiten gespeicherten Wertes zu dem Ergebnis des Addierens oder Differenzbildens zu halbieren,

Speichern des Ergebnisses des Addierens oder Differenzbildens oder, falls weiterverarbeitet wurde, des sich daraus ergebenden Wertes als ersten gespeicherten Wert eines folgenden zweiten Prozesses, Speichern des zweiten gespeicherten Wertes, oder, falls weiterverarbeitet wurde, des sich daraus ergebenden Wertes als zweiten gespeicherten Wert eines folgenden zweiten Prozesses,

so daß als Output aus dem letzten der zweiten Prozesse der Absolutwert dieser Funktion bei dem zuvor bestimmten Schnittpunkt erhalten wird.

5. Verfahren nach einem der vorhergehenden Ansprüche, bei dem die linearen Funktionen einen Punkt in einer Bildebene mit der Projektion auf einer Achse verbinden, die senkrecht zur Bildebene eines Strahles ist, welcher vom Auge eines Beobachters ausgeht, durch diesen Bildebenenpunkt hindurchtritt und beim Schneiden einer Oberfläche endet, wobei diese Projektion eine Oberflächentiefe darstellt, und bei dem das Verfahren für eine spezifizierte Linie in der Bildebene den Schnittpunkt von zwei derartigen Oberflächen entlang der spezifizierten Linie bestimmt und dann die Tiefen einer Vielzahl von spezifizierten Oberflächen an dem bestimmten Schnittpunkt bestimmt.

6. Verfahren nach einem der vorhergehenden Ansprüche, bei dem die linearen Funktionen einen Punkt in einer Bildebene zu Inkrementen in Oberflächentiefen verbinden und bei dem das Verfahren für eine spezifizierte Linie in der Bildebene ein Inkrement im Schnittpunkt von zwei derartigen Oberflächen bestimmt, welche nach Addition zu einem bevor bestimmten Schnittpunkt auf einer Bildebenenlinie den Schnittpunkt auf einer parallelen jedoch verschobenen Bildebenenlinie bestimmt und anschließend die Tiefeninkremente einer Vielzahl von spezifizierten Oberflächen bestimmt, welche nach Addition zu den entsprechenden Oberflächentiefen bei dem zuvor bestimmten Schnittpunkt die Oberflächentiefen bei dem neuen Schnittpunkt bestimmen.

7. Schaltkreis zur Bestimmung des Schnittpunktes von zwei linearen Funktionen, die beide bezüglich derselben unabhängigen Variablen variieren, wobei dieser Schaltkreis eine Vielzahl von Zellen (Zelle a ... Zelle n) in Reihe aufweist, wobei jede Zelle besitzt :

ein(en) ersten(s) Speicher oder Schaltmittel (100, 110, ... ; 200, 210 ...) zum Speichern der Wertdifferenz der beiden Funktionen für einen definierten Wert dieser unabhängigen Variablen,

ein(en) zweiten(s) Speicher oder Schaltmittel (101, 111, ... ; 201, 211, ...) zum Speichern der Differenz in den Inkrementwerten der beiden dieser Funktionen für einen definierten Inkrementwert dieser unabhängigen Variablen, wobei der definierte Inkrementwert dem Bereich der unabhängigen Variablenwerte entspricht, innerhalb dessen dieser Schnittpunkt erwartet wird,

Vergleichsmittel (102, 112, ... ; 202, 212, ...) zum Vergleichen der Polarität der in den Speichern gespeicherten Werte, ein Schaltmittel (103, 113, ... ; 203, 213, ...) zum Speichern des Ergebnisses dieses Vergleichs und zur Verfügungstellung eines Vergleichssignales sowohl an ein Mittel zum Akkumulieren des Wertes dieser unabhängigen Variablen bei einem Schnittpunkt als auch zu einem arithmetischen Schaltkreis (105, 115, ... ; 205, 215, ...), der, entsprechend des ihm zugeführten Vergleichssignales die Inhalte der zuvor definierten Speicher entweder addiert oder voneinander abzieht, und

Verarbeitungsmittel (108, ..., 118 ; 209, 208, ..., 219, 218) zum Verarbeiten der Inhalte des zweiten Speichers und/oder der Ergebnisse dieser Addition oder Differenzbildung, um das Ergebnis zu verdoppeln bezüglich des Wertes von dem zweiten Speicher (101, 111, ... ; 201, 211, ...) worin bei Betrieb der Wert von dem zweiten Speicher (101, 111, ... ; 201, 211, ...) zu dem zweiten Speicher oder Schaltmittel (111, ..., 121 ; 211, ..., 221) der folgenden Zelle übertragen wird und das Ergebnis dieser Addition oder Differenzbildung dem ersten Speicher oder Schaltmittel (110, ..., 120 ; 210, ..., 220) der folgenden Zelle übermittelt wird,

dieser Wertdifferenz der beiden Funktionen und die Differenz hinsichtlich des Inkrementwertes der beiden Funktionen addiert, voneinander subtrahiert und in der selben Art und Weise verarbeitet wird und durch diese Reihe von Zellen (Zelle a ... Zelle n) passiert, wobei beim Passieren durch die letzte dieser Zellen der aus den Outputs dieser polaritätsvergleiche akkumulierte Wert eine Annäherung an den Wert der unabhängigen Variablen beim Schnittpunkt mit einer bekannten Fehlergrenze darstellt.

8. Schaltkreis nach Anspruch 7, bei dem das Verarbeitungsmittel (108, ..., 118) in der Lage ist, die Inhalte des zweiten Speichers (101, 111, ...) durch einen Faktor zwei zu dividieren und den dividierten Wert zu dem zweiten Speicher oder Schaltmittel (111, ..., 121) der folgenden Zelle zu übertragen.

9. Schaltkreis nach Anspruch 7, bei dem das Verarbeitungsmittel (209, 208, ..., 219, 218) in der Lage ist, das Ergebnis dieser Addition oder Differenzbildung mit dem Faktor zwei zu multiplizieren und den multiplizierten Wert dem ersten Speicher oder Schaltmittel (210, ..., 220) der folgenden Zelle zur Verfügung zu stellen.

10. Schaltkreis nach Anspruch 7, 8 oder 9, bei dem bei Betrieb nach Festlegen des Zustandes des Vergleichsmittelzeichens (102, 112, ... ; 202, 212, ...) durch Passieren durch die Vielzahl von Zellen (Zelle a ... Zelle n) der zuvor genannten Wertdifferenz und der Differenz hinsichtlich des Inkrementwertes dieser beiden Funktionen, der Absolutwert einer Funktion für diesen definierten Wert der unabhängigen Variablen einem ersten Speicher (100, 200) der ersten Zelle (Zelle a) und der Inkrementwert dieser Funktion für diesen definierten Inkrementwert dieser unabhängigen Variablen einem zweiten Speicher (101, 201) der ersten Zelle zugeführt werden, wobei beim Passieren durch die Vielzahl von Zellen der Absolutwert dieser Funktion bei dem zuvor definierten Schnittpunkt als Output aus der letzten Zelle (Zelle n) erhalten wird.

11. Schaltkreis nach einem der Ansprüche 7 bis 10, bei dem bei Betrieb ein neues Schnittsignal bereitgestellt wird, wobei dieses Signal dazu verwendet wird zu unterscheiden zwischen dem Zurverfügungstellen der Differenzwerte, die zum Betrieb des Mittels zum Schalten der Outputs der zuvor beschriebenen Polaritätsvergleichsschaltoutputs verwendet wird, und dem Zurverfügungstellen der Absolutwerte, die zur Bestimmung der Werte der Funktionen beim Schnittpunkt verwendet werden.

12. Schaltkreis nach einem der Ansprüche 7 bis 11, bei dem ein Kontrollmittel (150, 250) vorgesehen ist, das bei Betrieb nach Empfang dieses neuen Schnittsignals und einer kontinuierlichen Sequenz von Uhrenpulsen Zeitsignale generiert und liefert an die Schalter (103,113, ... ; 203, 213, ...), um die Outputs dieser Vergleichskomperatoren (102, 112, ... ; 202, 212, ...) zu speichern, und auch zum Mittel zum Akkumulieren dieser Outputs in Synchronisation mit den die Vielzahl von Zellen hinabpassierenden Funktionsdifferenzwerten, und zusätzliche Zeitsignale generiert und liefert an die Speicher in der Vielzahl der Zellen (Zelle a ... Zelle n), um den Transfer der Funktionsdifferenzwerte von einer vorherigen zu einer folgenden Zelle zu bewirken und wobei dieser Schaltkreis danach Zeitsignale generiert und liefert an die Speicher (100, 110, ... 101, 111, ... ; 200, 210, ... 201, 211) in der Vielzahl von Zellen, um den Transfer der absoluten Funktionswerte von einer vorhergehenden zu einer folgenden Zelle zu bewirken, während Veränderungen der Inhalte dieser Polaritätsvergleichsschalter (102, 112, ... ; 202, 212, ...) verhindert werden und wobei der Schaltkreis Zeitsignale generiert und liefert an das Mittel zum Akkumulieren dieser Polaritätsvergleichsbits und zu dem ersten Speicher (220) der letzten Zelle (Zelle n), um den Wert des Schnittpunktes und die Funktionswerte auszugeben.

13. Schaltkreis nach Anspruch 12, bei dem bei Betrieb das Kontrollmittel (150, 250) eine Vielzahl von Zeitsignalen generiert und liefert an eine entsprechende Vielzahl von Schaltern (103, 113, ... ; 203, 213, ...), um die Outputs dieser Polaritätskomparatoren (102, 112 ... ; 202, 212, ...) zu speichern, sowie an eine entsprechende Vielzahl von Mitteln zum Akkumulieren dieser Outputs, um die akkumulierten Werte aus diesem Mittel auszugeben, so daß jeder korrespondierende Satz von Schaltern und Akkumulierungsmitteln auch zu einem der verschiedenen gleichzeitig von dem Schaltkreis berechneten Schnittwerte korrespondiert.

14. Schaltkreis nach Anspruch 12 oder 13, bei dem bei Betrieb das Kontrollmittel die Generierung und die Zurverfügungstellung beziehungsweise Lieferung entsprechend einem Wert, der die Zahl der in der Leitung (Pipeline) zu aktivierenden Zellen definiert, wobei dieser Wert mit der Zeit als neues Schnittsignal zur Verfügung gestellt wird, an die Vielzahl von Zellen, so daß die Leitung mit der definierten Zahl von Zellen funktioniert, wobei der Schaltkreis auch dazu in der Lage ist, den Output jeder arithmetischen Einheit (105, 115, ... ; 205, 215, ...) in der Leitung zu einem Mittel zu leiten, das jedes seiner Inputsignale auswählen kann, so daß sie ausgegeben werden, wobei dieses Auswählmittel durch Signale kontrolliert wird, die von dem Kontrollmittel zur Verfügung gestellt werden.

15. Schaltkreis nach einem der Ansprüche 7 bis 14, bei dem die linearen Funktionen einen punkt in einer Bildebene mit der Projektion auf eine Achse verbinden, die senkrecht zur Bildebene eines Strahles ist, welcher vom Auge eines Beobachters ausgeht, durch diesen Bildebenenpunkt hindurchtritt und beim Schneiden einer Oberfläche endet, wobei diese Projektion als Oberflächentiefe bezeichnet ist, wobei dieser Schaltkreis für eine spezifizierte Linie in der Bildebene den Schnittpunkt von zwei derartigen Oberflächen entlang der spezifizierten Linien bestimmt und anschließend die Tiefen einer Vielzahl von spezifizierten Oberflächen beim bestimmten Schnittpunkt bestimmt.

16. Schaltkreis nach einem der Ansprüche 7 bis 15, bei dem die linearen Funktionen einen Punkt in einer Bildebene zu Inkrementen in Oberflächentiefen verbinden, wobei dieser Schaltkreis für eine spezifizierte Linie in der Bildebene das Inkrement im Schnittpunkt der beiden Oberflächen bestimmt, welches nach Addition zu einem zuvor festgelegten Schnittpunkt auf einer Bildebenenlinie den Schnittpunkt auf einer parallelen jedoch verschobenen Bildebenenlinie bestimmt und anschließend die Tiefeninkremente einer Vielzahl von spezifizierten Oberflächen festlegt, wobei diese Inkremente nach Addition zu den korrespondierenden Oberflächentiefen bei dem zuvor bestimmten Schnittpunkt die Oberflächentiefen bei dem neuen Schnittpunkt festlegen.

## Revendications

1. Une méthode de détermination d'un point d'intersection de deux fonctions linéaires qui toutes les deux varient selon la même variable indépendante, la dite méthode incluant une pluralité de premières opérations, la première, au minimum, de ces premières opérations comprenant les stades suivants :
la mémorisation d'une différence dans la valeur des deux fonctions pour une valeur définie de la variable indépendante, de manière à obtenir une première valeur mémorisée ;
la mémorisation d'une différence dans les valeurs progressivement croissantes des deux fonctions pour une valeur d'accroissement progressif définie de la variable indépendante, de manière à obtenir une deuxième valeur mémorisée, la dite valeur d'accroissement progressif définie de la variable indépendante correspondant à une gammes de valeurs dans la variable indépendante, le point d'intersection des deux fonctions étant prévu dans les limites de la dite gamme ;
la comparaison de la polarité de la première valeur mémorisée et de la deuxième valeur mémorisée ;
la mémorisation du résultat de la comparaison, et également l'accumulation du résultat de la comparaison ;
l'addition ou la différenciation, selon le résultat de la comparaison, de la première valeur mémorisée et de la deuxième valeur mémorisée ;
le traitement de la deuxième valeur mémorisée et/ou du résultat de la dite addition ou différenciation, de manière à partager en deux le rapport entre la deuxième valeur mémorisée et le résultat de la dite addition ou de la dite différenciation ;
la mémorisation du résultat de la dite addition où de la dite différenciation, ou s'il y a eu traitement, de la valeur dérivée de ce résultat, de façon à obtenir une première valeur mémorisée d'une première opération suivante ;
la mémorisation de la deuxième valeur mémorisée, ou s'il y a eu traitement, de la valeur qui en a été dérivée, de façon à obtenir une deuxième valeur mémorisée d'une première opération suivante ;
ceci afin que la différence de valeur des deux fonctions, et la différence de valeur d'accroissement progressif des deux fonctions, soient ajoutées, différenciées et traitées de manière identique dans des premières opérations successives, une approximation de la valeur de la variable indépendante au point d'intersection pouvant ainsi être obtenue, avec une limite d'erreur connue, par l'accumulation des résultats des comparaisons de la première valeur mémorisée et de la deuxième valeur mémorisée respectives de chaque première opération.

2. Une méthode selon la revendication 1, dans laquelle le dit traitement comprend la division par deux de la deuxième valeur mémorisée.

3. Une méthode selon la revendication 1, dans laquelle le dit traitement comprend la multiplication par deux du résultat de la dite addition, ou du résultat de la dite différenciation.

4. Une méthode selon la revendication 1, 2 ou 3, comprenant en outre une pluralité de deuxièmes opérations correspondant respectivement aux dites premières opérations, une au moins de ces deuxièmes opérations comprenant les stades suivants :
la mémorisation d'une valeur absolue d'une fonction pour la valeur définie de la variable indépendante, de manière à obtenir une première valeur mémorisée ;
la mémorisation d'une valeur d'accroissement progressif de la dite fonction pour la valeur définie de la variable indépendante, de manière à obtenir une deuxième valeur mémorisée ;
l'addition ou la différenciation, selon le résultat de la comparaison avec la première opération correspondante, de la première valeur mémorisée et de la deuxième valeur mémorisée ;
le traitement de la deuxième valeur mémorisée, et/ou du résultat de la dite addition ou de la dite différenciation, de manière à diviser par deux le rapport entre la deuxième valeur mémorisée et le résultat de la dite addition ou de la dite différenciation ;

la mémorisation du résultat de la dite addition ou de la dite différenciation, ou s'il y a eu traitement, de la valeur dérivée de ce résultat, de manière à obtenir une première valeur mémorisée d'une deuxième opération suivante ;

la mémorisation de la deuxième valeur mémorisée, ou s'il y a eu traitement, de la valeur qui en a été dérivée, de manière à obtenir une deuxième valeur mémorisée d'une deuxième opération suivante, ceci de façon que soit obtenue, en tant que sortie de l'opération finale des deuxièmes opérations, la valeur absolue de la dite fonction au point d'intersection préalablement déterminé.

5. Une méthode selon une quelconque des revendications précédentes, dans laquelle les fonctions linéaires raccordent un point dans un plan image à le projection, sur un axe perpendiculaire par rapport au plan image, d'un rayon partant du point oculaire d'un observateur, passant par le dit point de plan image, et se terminant par l'intersection d'une surface, la dite projection constituant une profondeur de surface, et la dite méthode déterminant, pour une ligne spécifiée dans le plan image, le point d'intersection de deux surfaces de ce genre le long de la ligne spécifiée, et déterminant ensuite les profondeurs d'une pluralité de surfaces spécifiées au point d'intersection déterminé.

6. Une méthode selon une quelconque des revendications précédentes, dans laquelle les fonctions linéaires raccordent un point dans un plan image à des accroissements progressifs en profondeurs de surface, la dite méthode déterminant, pour une ligne spécifiée dans le plan image, un accroissement progressif dans le point d'intersection de deux surfaces de ce genre, lequel, lorsqu'il est ajouté à un point d'intersection préalablement déterminé sur une ligne du plan image, détermine le point d'intersection sur une ligne de plan image parallèle mais décalée, et détermine ensuite les accroissements progressifs de profondeur d'une pluralité de surfaces spécifiées qui, lorsqu'ils sont ajoutés aux profondeurs de surfaces correspondantes au point d'intersection déterminé préalablement, déterminent les profondeurs de surface au nouveau point d'intersection.

7. Un circuit pour la détermination du point d'intersection de deux fonctions linéaires, qui toutes les deux varient selon la même variable indépendante, le dit circuit comprenant une pluralité d'éléments (éléments a .... élément n) disposés en série, chaque élément incluant :

un premier moyen de garde ou de réserve (100, 110 ... ; 200, 210 ....) pour conserver la différence de valeur des deux dites fonctions pour une valeur définie de la dite variable indépendante ;

un deuxième moyen de garde ou de réserve (101, 111 ... ; 201, 211 ....) pour conserver la différence dans les valeurs d'accroissement progressif des deux dites fonctions pour une valeur d'accroissement propressif défini de la dite variable indépendante, la dite valeur d'accroissement progressif défini correspondant à la gamme de valeurs de la variable indépendante dans les limites de laquelle il y a lieu de s'attendre à ce que se trouve le dit point d'intersection ;

des moyens de comparaison (102, 112 .... ; 202 .... 212 ;...) pour comparer la polarité des valeurs conservées dans les dites réserves, avec un moyen de garde (103, 113 .... 203, 213 ....) prévu pour conserver le résultat de la dite comparaison et pour fournir un signal de comparaison à la fois à un moyen pour l'accumulation de la valeur de la dite variable indépendante au point d'intersection, et également à un circuit arithmétique (105, 115, ... 205, 215,....) qui, en fonction du dit signal de comparaison qui lui est fourni, soit ajoute, soit différencie les contenus des moyens de garde définis ci-avant ; et

un moyen de traitement (108, ..., 118 ; 209, 208, ...., 219, 218), destiné au traitement des contenus du deuxième moyen de garde et/ou du résultat de la dite addition ou de la dite différenciation, de manière à doubler le dit résultat par rapport à la valeur à partir du deuxième moyen de garde (101, 111, ... ; 201, 211, ...),

la disposition permettant, lors de l'utilisation, de fournir la valeur à partir du deuxième moyen de garde (101, 111, .... ; 201, 211 ...) au deuxième moyen de garde ou de réserve (111, ..., 121 ; 211, ..., 221) de l'élément suivant, et

de fournir le résultat de la dite addition ou de la dite différenciation au premier moyen de garde ou de réserve (110, ..., 120 ; 210, ..., 220) de l'élément suivant,

la dite différence dans la valeur des deux fonctions et la différence dans la valeur d'accroissement progressif des deux fonctions étant ajoutées, différenciées et traitées de la même façon en passant dans la dite série d'éléments (élément a .... élément n), la valeur accumulée à partir des sorties des dites comparaisons de polarité, lorsqu'elle passe dans le dernier des éléments, étant une approximation de la valeur de la variable indépendante au point d'intersection, avec une limite d'erreur connue.

8. Un circuit selon la revendication 7, dans lequel le dit moyen de traitement (108, .... ; 118) est prévu pour fonctionner de manière à diviser par un facteur de deux le contenu du deuxième moyen de garde (101, 111...) et pour fournir la valeur divisée au deuxième moyen de garde ou de réserve (111, ... ; 121) de l'élément suivant.

9. Un circuit selon la revendication 7, dans lequel le dit moyen de traitement (108, ..., 118) est prévu pour fonctionner de manière à multiplier par un facteur de deux le résultat de la dite addition ou de la dite différenciation et pour transmettre la valeur multipliée au premier moyen de garde ou de réserve (210, ...., 220) de l'élément suivant.

10. Un circuit selon la revendication 7, 8 ou 9, dans lequel, lors de l'utilisation, après la fixation des états des moyens de comparaison de signes (102, 112 ... ; 202, 212 ....) par le passage, dans la pluralité d'éléments (élément a .... élément n) de la différence précitée en valeur et de la différence en valeur d'accroissement progressif des deux dites fonctions, il est fourni au dit premier moyen de garde (100, 200) du premier élément (élément a) la valeur absolue d'une fonction pour la dite valeur définie de la variable indépendante, et au deuxième moyen de garde (101, 201) du premier élément la valeur d'accroissement progressif de la dite fonction pour la dite valeur d'accroissement progressif défini de la dite variable indépendante, la valeur absolue de la dite fonction au point d'intersection préalablement détermine pouvant ainsi, sur passage dans la pluralité d'éléments, être obtenue sous forme de sortie à partir du dernier élément (élément n).

11. Un circuit selon une quelconque des revendications 7 à 10, dans lequel, lors de l'utilisation, un nouveau signal d'intersection est fourni, le dit signal étant utilisé pour établir la distinction entre la fourniture de valeurs de différence utilisées pour assurer le fonctionnement du moyen de garde des sorties pour les sorties de réserves de comparaison préalablement décrites, et la fourniture de valeurs absolues employées pour la détermination de la valeur des fonctions au point d'intersection.

12. Un circuit selon une quelconque des revendications 7 à 11, dans lequel est prévu un moyen de commande (150, 250) qui en service, lors de la réception du dit nouveau signal d'intersection et d'une séquence continue d'impulsions de minuterie, produit et fournit des signaux de minuterie aux moyens de garde (103, 113, .... ; 203, 213 ....) pour le maintien des sorties des dits comparateurs de polarité (102, 112, .... ; 202, 212 ...), ainsi qu'au moyen pour l'accumulation des dites sorties en synchronisation avec le passage de valeurs de différence de fonctions le long de la pluralité d'éléments, et produit et fournit également des signaux de minuterie additionnels pour les moyens de garde dans la pluralité d'éléments (élément a .... élément n) de manière à assurer le transfert de valeurs de différence de fonctions d'un élément précédent à un élément suivant, le dit circuit produisant et fournissant ensuite des signaux de minuterie aux moyens de garde (100, 110, ... 101, 111, .... ; 200, 210, .... 201, 211) dans la pluralité d'éléments, de manière à assurer le transfert de valeurs absolues de fonctions d'un élément précédent à l'élément suivant, tout en évitant des modifications aux contenus des dits moyens de réserve de comparaisons de polarité (102, 112, .... ; 202, 212, ....), le dit circuit produisant et fournisssant également des signaux de minuterie au moyen d'accumulation des dits bits de comparaison de polarité ainsi qu'au dit premier moyen de garde (220) de l'élément final (élément n), pour la sortie de la valeur du point d'intersection et des valeurs des fonctions.

13. Un circuit selon la revendication 12, dans lequel, lors de l'utilisation, le moyen de commande (150, 250) produit et fournit une pluralité de signaux de minuterie à une pluralité correspondante de moyens de garde (103, 113, .... : 203, 213, ....) pour le maintien des sorties des comparateurs de polarité (102, 112, .... : 202, 212, ....), ainsi qu'à une pluralité correspondante de moyens d'accumulation des dites sorties pour la sortie des valeurs accumulés à partir des dits moyens, de façon que chaque jeu correspondant de moyens de garde et de moyens d'accumulation corresponde également à une des plusieurs valeurs d'intersection calculées simultanément par le circuit.

14. Un circuit selon la revendication 12 ou 13, dans lequel, lors de l'utilisation, le moyen de commande assure la dite production et la dite fourniture selon une valeur définissant le nombre d'éléments devant être rendus actifs dans le pipeline, cette valeur étant fournie avec minutage sous forme de nouveau signal d'intersection à la pluralité d'éléments de manière que le pipeline fonctionne avec le nombre défini d'éléments, le circuit étant également adapté pour fournir la sortie de chaque unité arithmétique (105, 115, .... ; 205, 215,...) dans le pipeline à un moyen de sélection de chacun de ses signaux d'entrée pour une sortie, le dit moyen de sélection étant contrôlé par des signaux fournis par le moyen de commande.

15. Un circuit selon une quelconque des revendications 7 à 14, dans lequel les fonctions linéaires raccordent un point dans un plan image à la projection, sur un axe perpendiculaire par rapport au plan image, d'un rayon partant du point oculaire de l'observateur, en passant par le dit point de plan image et en se terminant à l'intersection d'une surface, la dite projection constituant une profondeur de surface, et le dit circuit déterminant, pour une ligne spécifiée dans le plan image, le point d'intersection de deux surfaces de ce genre le long de la ligne spécifiée, et déterminant ensuite les profondeurs d'une pluralité de surfaces spécifiées au point d'intersection déterminé.

16. Un circuit selon une quelconque des revendications 7 à 15, dans lequel les fonctions linéaires raccordent un point dans un plan image à des accroissements progressifs en profondeurs de surfaces, le dit circuit déterminant, pour une ligne spécifiée dans le plan image, l'accroissement progressif dans le point d'intersection de deux surfaces de ce genre, lequel, lorsqu'il est ajouté à un point d'intersection préalablement déterminé sur une ligne du plan image, détermine le point d'intersection sur une ligne de plan image parallèle mais décalée, et détermine ensuite les accroissements progressifs de profondeur d'une pluralité de surfaces spécifiées qui, lorsqu'ils sont ajoutés aux profondeurs de surface correspondantes au point d'intersection préalablement déterminé, déterminent les profondeurs de surface au nouveau point d'intersection.

FIG. I.

FIG. 2.

FIG. 3.

FIG. 4.

FIG. 5.

FIG. 6.

FIG. 7.

FIG. 8.

FIG. 9.

FIG. 10.